(19) Europäisches Patentamt
European Patent Office
Office européen des brevets

(11) EP 1 316 567 B1

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.$^7$: **C08F 236/10**, C08F 212/08, C09D 109/08, C09D 125/10

(21) Anmeldenummer: **02023279.9**

(22) Anmeldetag: **17.10.2002**

(54) **Wässrige Polymerisatdispersion und ihre Verwendung als Wasserdampfsperre**

Aqueous polymer dispersions and their use as water vapor barriers

Dispersions aqueuses de polymères et leur utilisation en tant que barrières contre la vapeur d'eau

(84) Benannte Vertragsstaaten:
**DE ES FR GB IT SE**

(30) Priorität: **30.11.2001 DE 10158652**

(43) Veröffentlichungstag der Anmeldung:
**04.06.2003 Patentblatt 2003/23**

(73) Patentinhaber: **BASF Aktiengesellschaft**
**67056 Ludwigshafen (DE)**

(72) Erfinder:
- **Koppers, Markus, Dr.**
  **29664 Walsrode (DE)**
- **Schmidt, Marco**
  **68159 Mannheim (DE)**
- **Anselmann, Thomas**
  **76829 Landau (DE)**
- **Schmidt-Thümmes, Jürgen, Dr.**
  **67141 Neuhofen (DE)**
- **Zott, Mike**
  **67157 Wachenheim (DE)**
- **Wistuba, Eckehardt, Dr.**
  **67098 Bad Dürkheim (DE)**

(56) Entgegenhaltungen:
**EP-A- 0 039 896**
**EP-A- 0 773 245**
**DE-A- 4 029 733**
**US-A- 2 689 235**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 316 567 B1

Printed by Jouve, 75001 PARIS (FR)

## Beschreibung

Die vorliegende Erfindung betrifft eine wäßrige Polymerisatdispersion, deren in disperser Verteilung befindliches Polymerisat in radikalisch polymerisierter Form aus

| | |
|---|---|
| 20 bis 65 Gew.-% | wenigstens eines vinylaromatischen Monomeren (Monomere A), |
| 30 bis 75 Gew.-% | wenigstens eines zwei konjugierte ethylenisch ungesättigte Doppelbindungen aufweisenden Monomeren (Monomere B) und |
| 0,5 bis 10 Gew.-% | wenigstens eines sonstigen Monomeren C, ausgewählt aus der Gruppe der $\alpha,\beta$-monoethylenisch ungesättigten Mono- und Dicarbonsäuren sowie ihrer Amid- oder ihrer Esterderivate |

aufgebaut ist und deren Gehalt GA an Alkalimetallionen, bezogen auf die Masse des dispergierten Polymerisates ≥ 0,5 Gew.-% beträgt, wobei der pH-Wert des wäßrigen Dispergiermediums auf einen Wert unterhalb von 6 eingestellt wird.

Weiterhin betrifft die vorliegende Erfindung die Verwendung der wäßrigen Polymerisatdispersion als Wasserdampfsperre, sowie zum Beschichten von Substraten oder der Wände von Feucht- und Kühlräumen. Darüber hinaus erstreckt sich die vorliegende Erfindung auch auf ein Verfahren zur Herstellung der wäßrigen Polymerisatdispersion sowie auf wäßrige Polymerisatzubereitungen aus den wäßrigen Polymerisatdispersionen.

Luft enthält normalerweise eine bestimmte Wasserdampfmenge, die einen bestimmten Partialdruck ausübt. Diese Wasserdampfaufnahme der Luft ist begrenzt und hängt von der Temperatur ab. Mit steigender Temperatur nimmt das Wasserdampf-Aufnahmevermögen stark zu. Bei der größtmöglichen Dampfmenge ist der Partialdruck gleich dem Sättigungsdruck des Wassers bei derselben Temperatur. Das prozentuale Verhältnis der in der Luft vorhandenen Dampfmenge zur höchstmöglichen nennt man relative Luftfeuchtigkeit. Bei konstantem absoluten Feuchtigkeitsgehalt sinkt beim Erwärmen die relative Luftfeuchtigkeit und steigt umgekehrt beim Abkühlen an. Beim Unterschreiten der Taupunkttemperatur kondensiert die über den Sättigungswert hinaus vorhandene Dampfmenge zu Tauwasser.

Trennt eine poröse Wand zwei Bereiche mit unterschiedlichen Partialdrucken von Luft und Wasserdampf, so wandern Wasserdampf bzw. Luftmoleküle durch diese Wand bis zum Konzentrations- bzw. Druckausgleich. Weist die Wand längs ihrer Dicke gleichzeitig einen Temperaturgradienten auf, kann es innerhalb der Wand zur Überschreitung des Sättigungsdrucks des Wassers und somit zu Tauwasserbildung kommen, das die Wand schädigt (z.B. Minderung ihrer wärmeisolierenden Wirkung, Ausbildung von Schimmelpilzen etc.). Vor diesem Hintergrund ist es z.B. wünschenswert, die Innenwände von Feuchträumen (als Feuchträume werden hier Räume bezeichnet, deren Atmosphäre relativ zur Atmosphäre ihrer Umgebung einen erhöhten Wasserdampfgehalt aufweist; Beispiele für Feuchträume sind Küchen, Baderäume, Molkereiräume, Industrieräume, Kellerräume) möglichst wasserdampfundurchlässig zu gestalten, d.h., mit einer Wasserdampfsperre zu versehen. Desgleichen gilt für die Außenwände von Räumen, deren Umgebungsatmosphäre einen relativ erhöhten Wasserdampfgehalt aufweist (z.B. die Außenwände von Kühlräumen). Ein weiteres Anwendungsgebiet für Wasserdampfsperren bilden Holzanstriche. Aufgrund seiner hygroskopischen Beschaffenheit schrumpft bzw. quillt Holz bei wechselnder relativer Luftfeuchtigkeit als Folge der dadurch bedingten Wasseraufnahme bzw. -abgabe, es "arbeitet", womit in der Regel Beschädigungen des Holzanstrichs einhergehen. Es ist daher wünschenswert, entweder die Holzoberfläche vor Aufbringung des eigentlichen Schutzanstrichs wasserdampfundurchlässig auszurüsten oder den Holzanstrich selbst wasserdampfundurchlässig zu gestalten.

Aus Römpps Chemie-Lexikon, Achte Auflage, 1981, Cm-G, Franck Verlag, Stuttgart S. 974 ist bekannt, daß die wäßrigen Diofan®-Polymerisatdispersionen der BASF AG Verfilmungen mit hoher Wasserdampfdichtigkeit zu bilden vermögen. Aus diesem Grund sind die Verfilmungen von Diofan A 601 sowie von Diofan A 690 als Wasserdampfsperren sowohl für typische Wandoberflächenmaterialien wie Zementstriche, Beton, Gips, Gipskartonplatten, Preßholzspanplatten, Sperrholz, Hartfaserplatten und Mauerwerke als auch für Holz selbst gut geeignet.

Die Wasserdampfsperrwirkung kann dabei in einfacher Weise dadurch erzielt werden, daß man die jeweilige Oberfläche entweder mit der wäßrigen Polymerisatdispersion selbst oder mit einer geeigneten Masse beschichtet, die die wäßrige Polymerisatdispersion als Bindemittel enthält. Beim Abtrocknen der Beschichtung erfolgt die Ausbildung des die Sperrwirkung ausübenden Polymerisatfilmes.

Die genannten Diofane vermögen auch bei den häufigsten Anwendungstemperaturen (5 bis 35°C) Verfilmungen mit erhöhter Elastizität zu bilden. Dies ist insofern von Bedeutung, als die wasserdampfdicht auszurüstenden Untergründe in der Regel Risse aufweisen, deren Ausdehnung bei Temperaturänderungen Schwankungen unterworfen ist. Aufgrund ihrer erhöhten Elastizität können die Diofanverfilmungen diesen Schwankungen ohne Eigenrißbildung (Rißstellen eröffnen Wasserdampfdurchtritt) entsprechend folgen und ermöglichen so eine dauerhafte Wasserdampfsperre.

Bemerkenswerterweise vermögen die Diofane das vorgenannte Eigenschaftsprofil auch auf Beschichtungsmassen zu übertragen, die neben dem Diofan bis zu 60 % ihres Feststoffgesamtvolumens an feinteiligen mineralischen Materialien wie Füllstoffe und Pigmente zugesetzt enthalten (während Füllstoffe und Pigmente üblicherweise an Hand ihrer unterschiedlichen Feinteiligkeit sowie ihres verschiedenen Brechungsindex begrifflich gegeneinander abgegrenzt werden, soll der Begriff Pigment hier als beide umfassend verwendet werden; in entsprechender Weise bildet vorgenannter Volumenanteil die Pigmentvolumenkonzentration (PVK)). Dies eröffnet die Möglichkeit die Wasserdampfsperren optisch ansprechend sowie in einfacher Weise mit variabler Schichtdicke zu erzeugen.

Auch vermögen die Diofanverfilmungen in hervorragender Weise auf den als mögliche Wandoberflächenmaterialen genannten Materialen zu haften.

Nachteilig an den Diofanen ist jedoch, daß das in ihnen in polymerisierter Form enthaltene Vinylidenchlorid als Funktion der Zeit unter Einwirkung des wäßrigen Dispergiermediums einer fortschreitenden Hydrolyse unter Ausbildung von Chlorwasserstoff unterworfen ist. Letzterer ist unerwünscht und beeinträchtigt u.a. die Lagerstabilität, Verdickbarkeit und Formulierbarkeit entsprechender Beschichtungszubereitungen (z.B. wird als Pigment enthaltenes feinteiliges $CaCO_3$ durch die Chlorwasserstoffentwicklung angegriffen).

Aus der EP-A 773245 sind wäßrige Polymerisatdispersionen bekannt, die u.a. als Wasserdampfsperren zum Abdichten von Wänden in feuchten Räumen gut geeigent sind. In dieser Offenlegungsschrift wird dargelegt, dass der Gehalt (GA) an Alkalimetall $\leq$ 0,5 Gew.-%, bezogen auf die Masse des dispergierten Polymerisats sein soll. Nach der Lehre der EP-A 773 245 würde bei höheren Gehalten an Alkalimetallionen die Wirkung der Polymerisatdispersion als Wasserdampfsperre verloren gehen. Um die Polymerisatdispersion für deren Anwendung als Wasserdampfsperre hinreichend zu stabilisieren, wird deren pH-Wert auf mehr als 6 angehoben. Dies erfolgt nach der EP-A 773 245 dadurch, dass man als Neutralisationsmittel anstelle von Metallhydroxiden Ammoniak verwendet. Dies führt jedoch bei manchen Anwendungen insbesondere in geschlossenen Räumen zu einer Geruchsbelästigung beim Aufbringen der Polymerisatdispersion auf den Untergrund.

Der vorliegenden Erfindung lag daher die Aufgabe zugrunde, den geschilderten Nachteilen abzuhelfen und eine wäßrige Polymerisatdispersion für eine Verwendung zur Herstellung von Wasserdampfsperren zur Verfügung zu stellen, die insbesondere ohne Geruchsbelästigung auf den Untergrund aufgetragen werden kann und welche zugleich das vorteilhafte Eigenschaftsprofil der Diofane aufweist.

Demgemäß wurde gefunden, dass sich wäßrige Polymerisatdispersionen, deren in disperser Verteilung befindliches Polymerisat in radikalisch polymerisierter Form aus

| | |
|---|---|
| 20 bis 65 Gew.-% | wenigstens eines vinylaromatischen Monomeren (Monomere A), |
| 30 bis 75 Gew.-% | wenigstens eines zwei konjugierte ethylenisch ungesättigte Doppelbindungen aufweisenden Monomeren (Monomere B) und |
| 0,5 bis 10 Gew.-% | wenigstens eines sonstigen Monomeren C, ausgewählt aus der Gruppe der $\alpha,\beta$-monoethylenisch ungesättigten Mono- und Dicarbonsäuren sowie ihrer Amid- oder ihrer Esterderivate |

aufgebaut ist und deren Gehalt GA an Alkalimetallionen, bezogen auf die Masse des dispergierten Polymerisates $\geq$ 0,5 Gew.-% beträgt, wobei der pH-Wert des wäßrigen Dispergiermediums auf einen Wert unterhalb von 6 eingestellt wird, sich in der geforderten Weise zur Herstellung von Wasserdampfsperren gut eignen. Eine weitere Verbesserung der Fähigkeit, gute Wasserdampfsperreigenschaften aufzuweisen, ist dadurch möglich, dass man den pH-Wert weiter absenkt, wobei dann auch die Konzentration der Alkaliionen entsprechend sinkt.

Erfindungsgemäß geeignete Monomere A sind u.a. Styrol sowie Vinyltoluole, beispielsweise $\alpha$-Methylstyrol. Es können aber auch andere vinylaromatische Monomere, u.a. Divinylbenzol als Monomere A verwendet werden. Vorzugsweise wird Styrol eingesetzt.

Als Monomer B eignen sich solche Monomere, welche zwei konjugierte ethylenisch ungesättigte Doppelbindungen aufweisen, beispielsweise Butadien, 2-Methyl-Butadien (Isopren) oder 2,3-Dimethyl-butadien.

Das in der erfindungsgemäßen Polymerisatdispersion enthaltende Polymerisat enthält als Monomeres C ein solches Monomeres, das aus der Gruppe der $\alpha,\beta$-monoethylenisch ungesättigten Mono- und Dicarbonsäuren sowie ihrer Amid- oder ihrer Esterderivate ausgewählt ist. Als Monomere C können u.a. Vinylester von 1 bis 3 C-Atomen aufweisenden Alkancarbonsäuren, ferner Ester der Acrylsäure oder der Methacrylsäure mit 1 bis 8 C-Atomen aufweisenden Alkoholen, sowie 3 bis 6 C-Atome aufweisende $\alpha,\beta$-monoethylenisch ungesättigte Mono- und Dicarbonsäuren und weiterhin deren Amid- oder Esterderivate eingesetzt werden.

Besonders geeignete Monomere C sind u.a. Vinylformiat, Versaticsäuren und Versatate, Vinylacetat, Vinylpropionat, Acrylsäure, Methacrylsäure, Maleinsäure, Itaconsäure, Acrylamid, Methacrylamid, Methylacrylat, Methylmethacrylat, Ethylacrylat, Ethylmethacrylat, n-Butylacrylat, n-Butylmethacrylat, tert.-Butylacrylat, tert.-Butylmethacrylat, iso-Butylacrylat, iso-Butylmethacrylat, 2-Ethylhexylacrylat, 2-Ethylhexylmethacrylat, Hydroxyethylacrylat, Hydroxyethylmethacrylat, Hydroxypropylacrylat, Hydroxypropylmethacrylat, Hydroxybutylacrylat sowie Hydroxybutylmethacrylat. Besonders bevorzugt sind u.a. Itaconsäure sowie die Versaticsäuren.

Die erfindungsgemäß zu verwendenden wäßrigen Polymerisatdispersionen umfassen Ausführungsformen, deren in disperser Verteilung befindliches Polymerisat aus 20 bis 65 Gew.-% Monomere A, aus 30 bis 75 Gew.-% Monomere B sowie aus 0,5 bis 10 Gew.-% Monomere C besteht. Besonders bevorzugte wäßrige Polymerisationsdispersionen enthalten ein Polymerisat, welches aus 45 bis 60 Gew.-% Monomeres A, 35 bis 50 Gew.-% Monomeres B und aus 0,5 bis 10 Gew.-% Monomeres C besteht. Der Anteil des Monomeren C am Polymerisat liegt insbesondere bei 0,5 bis 5 Gew.-%, insbesondere bei 0,7 bis 3 Gew.-%.

Der z-mittlere Polymerisatteilchendurchmesser $\bar{d}_z$ der erfindungsgemäß einzusetzenden wäßrigen Polymerisatdispersionen beträgt in der Regel $\geq$ 100 nm bis $\leq$ 250 nm, häufig auch $\geq$ 140 nm bis $\leq$ 200 nm, und läßt sich nach der Methode der quasielastischen Lichtstreuung ermitteln. Der pH-Wert des wäßrigen Dispergiermediums (bezogen auf 25°C u. 1 atm) der erfindungsgemäß zu verwendenden wäßrigen Polymerisatdispersionen beträgt vorzugsweise $\leq$ 6 (Glaselektrode). Günstig ist der pH-Bereich von mehr als 4 und weniger als 6, insbesondere von 4,5 bis weniger als 6. Besonders bevorzugt sind pH-Werte zwischen 5 und 6. Die Einstellung des gewünschten pH-Wertes des wäßrigen Dispergiermediums erfolgt über die Konzentration der entsprechenden Alkalimetallhydroxide.

Erfindungsgemäß wesentlich ist weiterhin, daß der Gehalt der zu verwendenden wäßrigen Polymerisatdispersionen an Alkalimetallionen, bezogen auf die Masse des dispergierten Polymerisats, $\geq$ 0,5 Gew.-% beträgt. Besonders bevorzugte wäßrige Polymerisatdispersionen weisen einen Gehalt GA an Alkalimetallionen, bezogen auf die Masse des dispergierten Polymerisats auf, der im Bereich von $\geq$ 0,5 bis $\leq$ 0,7 Gew.-% liegt. Als Alkalimetallionen eignen sich insbesondere Natriumionen oder aber Kaliumionen, welche in Form ihrer Hydroxide eingesetzt werden. Es können aber auch Calciumionen mitverwendet werden.

Durch die Kombination der Einstellung des Gehalts GA an Alkalimetallionen, bezogen auf die Masse des dispergierten Polymerisats, auf $\geq$ 0,5 Gew.-% und des pH-Wertes des wäßrigen Dispergiermediums auf einen Wert unterhalb von 6 ist es möglich, wäßrige Polymerisatdispersionen bereitzustellen, welche u.a. bei der Herstellung von Wasserdampfsperren ohne Geruchsbelästigung eingesetzt werden können.

Die Herstellung der erfindungsgemäß zu verwendenden wäßrigen Polymerisatdispersionen aus ihren Ausgangsmonomeren A-C kann in an sich bekannter Weise nach der Methode der radikalischen wäßrigen Emulsionspolymerisation, d.h. unter Zusatz von radikalischem Polymerisationsinitiator, Dispergiermittel sowie gegebenenfalls das Molekulargewicht regelnden Substanzen erfolgen. In einfachster Weise werden dabei alle Ausgangssubstanzen unter Rühren ins Polymerisationsgefäß vorgelegt und anschließend die gewünschte Polymerisationstemperatur eingestellt. Die Zusammensetzung des Polymerisationsansatzes, insbesondere die Zusammensetzung der Monomeren A-C, wird dabei mit Vorteil so gewählt, daß die Glasübergangstemperatur Tg der Verfilmung der resultierenden wäßrigen Polymerisatdispersion (ermittelt mittels differential scanning calorimetry, 20°C/min., midpoint) -30 bis +15°C, häufig -10 bis +5°C beträgt. Der Zusammenhang zwischen Glasübergangstemperatur und Monomerenzusammensetzung ist dem Fachmann für statistische Copolymerisate und oberhalb von 50000 relativen Molekulargewichtseinheiten liegende Copolymerisatmolekulargewichte in guter Näherung durch die Beziehung nach Fox bekannt. Nach Fox (F.G. Fox, Bull. Am. Phys. Soc. (Ser. II) 1, 123 [1956] und Ullmanns Encyclopädie der technischen Chemie, 4.Auflage, Bd. 19, 1980, VCH Chemie, S. 18 gilt für die Glasübergangstemperatur von Mischpolymerisaten in guter Näherung:

$$\frac{1}{T_g} = \frac{X^1}{T_g^{\,1}} + \frac{X^2}{T_g^{\,2}} + \ldots\ldots \frac{X^n}{T_g^{\,n}},$$

wobei $X^1$, $X^2$, ...... $X^n$ die Massenbrüche der Monomeren 1, 2, ....n und $T_g^1$, $T_g^2$, $T_g^n$ die Glasübergangstemperaturen der jeweils nur aus einem der Monomeren 1, 2 ....., n aufgebauten Polymerisate in Grad Kelvin bedeuten. Die Glasübergangstemperaturen dieser Homopolymerisate der vorgenannten Monomere sind bekannt und z.B. in J. Brandrup, E.H. Immergut, Polymer Handbook 1st Ed., J. Wiley, New York 1966, 2nd Ed., J. Wiley, New York 1975, und 3rd Ed., J. Wiley, New York, 1989 sowie Ullmann's Encyclopedia of Industrial Chemistry, VCH Chemie, Vol. A 21, 1992, S. 169, Table 8, aufgeführt.

Als radikalische Polymerisationsinitiatoren kommen zur Durchführung der radikalischen wäßrigen Emulsionspolymerisation vor allem im wäßrigen Medium in der erforderlichen Einsatzmenge lösliche Initiatoren in Betracht. Es kann sich dabei sowohl um Peroxide, Peroxodischwefelsäure und deren Salze, als auch um Azoverbindungen handeln. Die Polymerisationstemperatur wird normalerweise dem verwendeten Initiatorsystem angepaßt. Sie kann 0 bis 130°C betragen. In Anwendung von Peroxodischwefelsäure oder deren Salzen beträgt sie in der Regel 70 bis 130°C, bevorzugt 75 bis 100°C. Der Arbeitsdruck kann bei der radikalischen wäßrigen Emulsionspolymerisation, der Polymerisationstemperatur und der Flüchtigkeit der zu polymerisierenden Monomeren angepaßt, 1 bis 10 atm und mehr betragen. Niedrige Polymerisationstemperaturen ermöglichen kombinierte Initiatorsysteme, die aus wenigstens einem Reduktionsmittel und wenigstens einem Peroxid und/oder Hydroperoxid zusammengesetzt sind, z.B. tert.-Butylhydroperoxid und Hydroxymethansulfinsäure oder deren Salze, oder Wasserstoffperoxid und Ascorbinsäure. Ganz besonders niedrige Polymerisationstemperaturen ermöglicht die Anwendung kombinierter Initiatorsysteme, die darüber hinaus eine geringe Menge einer im Polymerisationsmedium löslichen Metallverbindung, deren metallischen Komponente in mehreren Wertigkeitsstufen auftreten kann, enthalten. Als Beispiel sei die Kombination Ascorbinsäure/Eisen(II)sulfat/Wasserstoffperoxid angeführt. In der Regel werden, bezogen auf die Gesamtmenge der zu polymerisierenden Monomeren, 0,1 bis 3 Gew.-% an radikalischem Polymerisationsinitiator angewendet, wobei Peroxodischwefelsäure und ihre Salze bevorzugt verwendet werden.

Um die Stabilität der resultierenden wäßrigen Polymerisatdispersion zu gewährleisten werden im Rahmen der radikalischen wäßrigen Emulsionspolymerisation üblicherweise Dispergiermittel mitverwendet. Als solche kommen alle üblicherweise eingesetzten Dispergiermittel, d.h. sowohl Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie unterscheiden sich von den Schutzkolloiden ferner dadurch, daß sie im Wasser oberhalb der kritischen Micellbildungskonzentration zur Micellbildung befähigt sind.

Mitverwendete Emulgatoren können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Werden anionische Emulgatoren eingesetzt, so können diese vorzugsweise Natriumionen als Gegenion aufweisen. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 2 bis 30, Alkylrest: $C_{10}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Beispielhaft genannt seien die Alkalimetall- bzw. Ammoniumsalze der Dodecylbenzolsulfonsäure sowie die Alkalimetall- bzw. Ammoniumsalze des Schwefelsäurehalbesters von ethoxyliertem Dodecanol (EO-Grad: 2 bis 4). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete grenzflächenaktive Substanzen haben sich ferner Verbindungen der allgemeinen Formel I

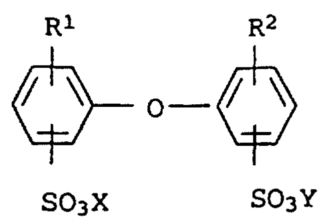

(I),

worin $R^1$ und $R^2$ Wasserstoff oder $C_4$-bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Individuell genannt seien Verbindungen I in denen X und Y Natrium oder Ammonium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2 A1 (Warenzeichen der Dow Chemical Company).

In der Regel beträgt die Menge an eingesetztem Dispergiermittel 1 bis 3 Gew.-% bezogen auf die radikalisch zu polymerisierenden Monomeren. Erfindungsgemäß von Vorteil ist, daß zur Herstellung selbst der am bevorzugtesten zu verwendenden wäßrigen Polymerisatdispersionen in der Regel $\leq 2$, bzw. $\leq 1{,}5$ bzw. $\leq 1$ Gew.-% an Dispergiermittel (in entsprechender Weise wie vorstehend bezogen) ausreichend sind.

Zur Steuerung des Molekulargewichts des resultierenden Polymerisats wird üblicherweise im Beisein von das Molekulargewicht regelnden Substanzen wie Mercaptanen, z.B. n-Dodecylmercaptan o. tert.-Dodecylmercaptan, polymerisiert. Typischerweise betragen die Einsatzmengen an Molekulargewichtsregler, bezogen auf die Menge der zu polymerisierenden Monomeren, 0,1 bis 5, meist bis 2,5 Gew.-%.

In der Regel wird unter Inertgasatmosphäre polymerisiert. Großtechnisch erfolgt die Durchführung radikalischer wäßriger Emulsionspolymerisationen meistens in Eisen- oder Stahlkesseln. Um negative Auswirkungen geringster im Verlauf der Polymerisation in Lösung gehender Eisenspuren auszuschließen, setzt man dem Polymerisationsgemisch normalerweise Chelatbildner zu, die Eisenionen zu komplexieren vermögen. Als typischer Vertreter sei Trilon® B genannt (das Dinatriumsalz der Ethylendiaminessigsäure). Üblicherweise sind, bezogen auf die zu polymerisierenden Monomeren, unter 1 Gew.-% liegende Einsatzmengen an Chelatbildnern ausreichend.

Die großtechnische Durchführung der radikalischen wäßrigen Emulsionspolymerisation zur Herstellung der erfindungsgemäß zu verwendenden wäßrigen Polymerisatdispersionen erfolgt aus Gründen einer sicheren Abfuhr der Reaktionswärme zweckmäßigerweise nach der Methode der Monomerenzulauffahrweise. Dies bedeutet, dass lediglich ein Teil des Polymerisationsansatzes ins Polymerisationsgefäß vorgelegt wird und insbesondere die überwiegende Menge der zu polymerisierenden Monomeren nach Maßgabe ihres Verbrauchs dem Polymerisationsgefäß kontinuierlich zugeführt wird. Vorzugsweise erfolgt die Monomerenzufuhr dabei in im wäßrigen Medium voremulgierter Weise. In der Regel wird die kontinuierliche Monomerenzufuhr von einer synchronen Initiatorzufuhr begleitet. Zur Verbesserung der Reproduzierbarkeit der mittleren Polymerisatteilchengröße umfaßt die Vorlage zweckmäßigerweise eine geringe Menge einer sehr feinteiligen vorgebildeten wäßrigen Polymerisatdispersion (einen sogenannten Saatlatex). In typischer Weise beträgt der zahlenmittlere Polymerisatteilchendurchmesser $\bar{d}_n$ des im wesentlichen monodispersen Saatlatex 30 nm. Ferner ist es günstig, wenn es sich bei dem Saatlatex um eine Polystyrolsaat handelt. Aus Gründen einer erhöhten Stabilität der dispersen Verteilung der Saatlatexpartikel, umfaßt die Vorlage im Falle von cozupolymerisierenden $\alpha,\beta$-monoethylenisch ungesättigten Carbonsäuren in der Regel einen Teil derselben. Auch der Chelatbildner ist normalerweise Bestandteil der Vorlage. Wird Molekulargewichtsregler mitverwendet, ist dieser in der Regel Bestandteil der Monomerenzulauf.

Zur Entfernung von flüchtigen organischen Bestandteilen aus der resultierenden wäßrigen Polymerisatdispersion wird diese im Anschluß an das eigentliche Polymerisationsverfahren häufig sowohl chemisch als auch physikalisch desodoriert. Bei der chemischen Desodorierung wird der wäßrigen Polymerisatdispersion spezieller Polymerisationsinitiator (z.B das System tert.-Butylhydroperoxid/Natriumdisulfit/Aceton) zugesetzt, der in besonders effektiver Weise unter den eigentlichen Polymerisationsbedingungen nicht einpolymerisierte Monomere (Restmonomere) zur Polymerisation initiiert und in die Polymerisatketten chemisch einbindet. Nach Durchführung der chemischen Desodorierung wird zum Zweck der Beseitigung von nicht copolymerisierbaren flüchtigen organischen Bestandteilen meist noch mit Wasserdampf gestrippt (physikalische Desodorierung). Es sind so erfindungsgemäß zu verwendende wäßrige Polymerisatdispersionen erhältlich, deren Restgehalt an flüchtigen organischen Verbindungen < 100 ppm (bezogen auf die Masse der wäßrigen Polymerisatdispersion) beträgt. Meist erfolgt die Herstellung der erfindungsgemäß zu verwendenden wäßrigen Polymerisatdispersionen mit einem Feststoffanteil von 40 bis 70, vorzugsweise von 50 bis 60 Gew.-%.

Erfindungsgemäß günstig ist, daß die Verfilmungen der erfindungsgemäß zu verwendenden wäßrigen Polymerisatdispersionen nicht nur gegenüber Wasserdampf eine erhöhte Sperrwirkung aufweisen, sondern auch gegenüber Wasser im flüssigen Aggregatzustand eine erhöhte abweisende Wirkung zeigen. Dies gewährleistet auch bei rückseitiger Durchfeuchtung eine bleibende Haftung und verhindert Blasen- und Rißbildung. Demgemäß eignen sich die erfindungsgemäß zu verwendenden wäßrigen Polymerisatdispersionen auch als Bindemittel für Dichtungsmassen. Mit besonderem Vorteil werden sie um in Wände angebrachte Installationen herum angewendet, um diese Nahtstellen sowohl gegenüber Wasserdampf als auch Kondenswasser abzudichten. In der Regel wird diesbezüglich zunächst eine Grundbeschichtung aufgebracht, in die meist ein Gewebe (z.B. ein Glasfasergewebe) eingelegt wird. Danach wird eine Endbeschichtung aufgebracht.

Wie bereits erwähnt, können die erfindungsgemäß zu verwendenden wäßrigen Polymerisatdispersionen bereits für sich als wasserdampfabsperrende Beschichtung (Grundierung oder Abschlußschicht) aufgebracht werden. Meist werden sie jedoch mit feinteiligen anorganischen Pigmenten versetzt als sogenannte wäßrige Polymerzubereitungen angewendet. Diesbezüglich ist es von Vorteil, daß die erfindungsgemäß zu verwendenden wäßrigen Polymerisatdispersionen auch ein erhöhtes Pigmentbindevermögen aufweisen. Typische Pigmentvolumenkonzentrationen liegen bei bis zu 60, in der Regel 10 bis 60, häufig 10 bis 55, meist 20 bis 45 Vol.-%. Die pigmentierten Systeme eignen sich insbesondere auch als Dichtungsmassen.

Als feinteilige anorganische Pigmente kommen u.a. in Betracht Glimmer, Kaolin, Schwerspat, Talkum, Quarzsand, Quarzmehl, Kreide, Titandioxid, Dolomit, Barytmehl, hydrophobierte feinteilige Kieselsäure, Eisenoxid u.a. Buntpigmente. Gegebenenfalls können auch organische Pigmente zum Zweck der Einfärbung mitverwendet werden. Der Korngrößtdurchmesser solcher Pigmente beträgt meist 1 bis 100 µm. Da die anorganischen Pigmente in der Regel in wäßrigem Medium im wesentlichen unlöslich sind, können so erfindungsgemäß zu verwendende wäßrige Polymerisatzubereitungen erhalten werden, deren Gehalt an im wäßrigen Medium gelösten Alkalimetallionen, bezogen auf die Masse des enthaltenen dispergierten Polymerisats, ≥ 0,5 Gew.-% vorzugsweise ≥ 0,5 bis ≤ 0,7 Gew.-% beträgt.

Neben Pigmenten enthalten die als Wasserdampfsperren aufzubringenden erfindungsgemäßen wäßrigen Polymerisatzubereitungen meist noch Entschäumer, Verdicker, Pigmentverteiler und Konservierungsmittel zugesetzt. In der Regel beträgt die Gesamtmenge dieser Hilfsmittel, einschließlich der Dispergiermittel der wäßrigen Polymerisatgrunddispersion, ≤ 10, bevorzugt ≤ 5 Gew.-%, bezogen auf die Gesamtmasse der wäßrigen Zubereitung. Vorzugsweise weisen auch diese Hilfsmittel keine in Wasser löslichen Alkalimetallionen bzw. wasserlöslichen Metallionen überhaupt auf. In typischer Weise werden die erfindungsgemäßen Wasserdampfsperren in Trockenschichtdicken von bis zu 2 mm, gegebenenfalls auch mehr, aufgebracht. Abschließend bleibt festzuhalten, daß die erfindungsgemäßen Wasserdampfsperren auch auf alkalischen Untergründen Langzeitwirksamkeit zeigen, so daß z.B. Hydrolysereaktionen nachfolgend aufgetragener Klebstoffe vermindert oder vermieden werden können.

In der Regel liegt die Wasserdampfdiffusionswiderstandszahl $S_d$/S der erfindungsgemäßen Wasserdampfsperren bei Werten ≥ 10000. Gleichzeitig sind Reißdehnungen von ≥ 200 % sowie eine Reißkraft ≥ 1,5 N/mm$^2$ möglich (bezogen auf trocken gelagerte Wasserdampfsperren).

Die erfindungsgemäßen wäßrigen Polymerisatdispersionen eignen sich ebenso wie die ebenfalls erfindungsgemäßen wäßrigen Polymerisatzubereitungen u.a. als Wasserdampfsperre oder zur Erzeugung einer Wasserdampfsperre, ferner zum Beschichten von Substraten sowie zum Beschichten der Wände von Feucht- oder Kühlräumen. Geeignete Substrate sind beispielsweise Beton, Gips, Gipskarton, Preßholz, Sperrholz, Hartfasern, Holz, Zementmörtel, Mauerwerk oder Zement.

Abschließend seien als weitere mögliche Verwendungen der erfindungsgemäßen wäßrigen Polymerisatdispersionen bzw. -zubereitungen festgehalten: die Verwendung als Grundierung (insbesondere von mineralischen Untergründen wie Zementmörtel oder Gipskarton), die Verwendung als Kronenkorkenabdichtung (can sealant), die Verwendung als Additiv zur Modifizierung von Zementmörtel, die Verwendung zur Beschichtung von Beton zum Schutz desselben vor Austrocknung während des Abbindens, sowie die Verwendung als Bindemittel für Korrosionsschutzanstriche (Schutz vor Wasser).

Beispiele

A. Herstellung der erfindungsmäß zu verwendenden wäßrigen Polymerisatdispersion ED

Beispiel 1:

In einem mit einem Ankerrührer ausgestatteten 160 1-Stahlreaktor wurden vorgelegt:

| | |
|---|---|
| 30,89 kg | VE-Wasser |
| 6,18 kg | Itaconsäure (7 Gew.-%) |
| 2,6 kg | Styrol-Saat |
| 0,17 kg | Ethylendiamintetraacetat (EDTA: 2 Gew.-%) |
| 4,83 kg | von Zulauf 1 |
| 1,14 kg | von Zulauf 2 |

Die Vorlage wurde einmal mit Stickstoff abgepreßt und unter Rühren auf die Polymerisationstemperatur von 90°C erwärmt, die während der Polymerisation aufrecht erhalten wurde. Bei Erreichen einer Kesselinnentemperatur von 80°C wurde damit begonnen, den Monomerzulauf (Zulauf 1) zuzufahren. Dieser wurde dem Polymerisationskessel innerhalb von 5 h kontinuierlich zudosiert. Zeitgleich beginnend mit dem Zulauf 1 wurde innerhalb von 5,5 h der Initiator (Zulauf 2) zugefahren.

Zulauf 1:

| | |
|---|---|
| 17,21 kg | VE-Wasser |
| 4,45 kg | Sulfatiertes Fettalkoholethoxylat (28 % Gew.-%) Na-Salz |
| 12,36 kg | Itaconsäure (7 Gew.-%) oder Acrylsäure |
| 1,64 kg | t-Dodecylmerkaptan |
| 46,93 kg | Styrol |
| 38,28 kg | Butadien |

Zulauf 2:

| | |
|---|---|
| 4,6 kg | VE-Wasser |
| 0,35 kg | Natriumpersulfat |

Nach beendeter Zufuhr von Zulauf 2 wurde das Polymergemisch nach 2 h unter Rühren bei 90°C gehalten. Danach wurde auf 80°C gekühlt und unter Aufrechterhaltung der 80°C innerhalb von 2 h eine Lösung 3 und 4 synchron kontinuierlich in den Reaktor dosiert.

Zulauf 3:

| | |
|---|---|
| 2,45 kg | VE-Wasser |
| 0,41 kg | tert. Butylhydroperoxid (t-BHP) (70 Gew.-%) |

Zulauf 4:

| | |
|---|---|
| 3 kg | Wasser |
| 0,18 kg | Aceton |
| 0,71 kg | Natriumdisulfit |

Anschließend wurde der pH-Wert des wäßrigen Mediums durch Zusatz einer ca. 10 %igen wässrigen Natriumhydroxid-Lösung (Zulauf 5) angehoben und danach durch Durchleiten von Wasserdampf physikalisch desodoriert.

Zulauf 5:

| | |
|---|---|
| 1,99 kg | VE-Wasser |
| 1,59 kg | Natriumhydroxid 25 % |

Erhalten wurde erfindungsgemäß eine zu verwendende Polymerisatdispersion, deren Feststoffgehalt etwa 52 Gewichtsprozent betrug und deren Restgehalt an flüchtigen, organischen Bestandteilen unterhalb von 100 ppm lag. Das dispergierte Polymerisat wies nachfolgende Monomerzusammensetzung auf:

| | |
|---|---|
| 54,25 Gew.-% | Styrol |
| 44,25 Gew.-% | Butadien |
| 1,5 Gew.-% | Itaconsäure |

Die Glasübergangstemperatur ihrer Verfilmung lag bei -3°C.

Beispiel 2:

Wie Beispiel 1, jedoch mit höherem NaOH-Gehalt.
In einem mit einem Ankerrührer ausgestatteten Stahlreaktor wurden vorgelegt:

| | |
|---|---|
| 13,49 kg | VE-Wasser |
| 0,002 kg | Ethylendiamintetraacetat (EDTA; 2 Gew.-%) |
| 5 kg | Itaconsäure (7 Gew.-%) |
| 1,5 kg | Styrolsaat (33 Gew.-%) |

(fortgesetzt)

| | |
|---|---|
| 2,82 kg | von Zulauf 1 |
| 1,43 kg | von Zulauf 2 |

Die Vorlage wurde einmal mit Stickstoff abgepreßt und unter Rühren auf die Polymerisationstemperatur von 90°C erwärmt, die während der Polymerisation aufrechterhalten wurde. Bei Erreichen einer Kesselinnentemperatur von 80°C wurde damit begonnen, den Monomerzulauf (Zulauf 1) zuzufahren. Dieser wurde dem Polymerisationskessel innerhalb von 5 h kontinuierlich zudosiert. Zeitgleich beginnend mit dem Zulauf 1 wurde innerhalb von 5,5 h der Initiator (Zulauf 2) zugefahren.

Zulauf 1:

| | |
|---|---|
| 7,6 kg | VE-Wasser |
| 2,571 kg | Sulfatiertes Fettalkoholethoxylat (28 Gew.-%) Na-Salz |
| 10 kg | Itaconsäure (7 Gew.-%) (Acrylsäure) |
| 0,95 kg | t-Dodecylmercaptan |
| 27,12 kg | Styrol |
| 22,12 kg | Butadien |

Zulauf 2:

| | |
|---|---|
| 5,52 kg | VE-Wasser |
| 0,2 kg | Natriumpersulfat |

Nach beendeter Zufuhr von Zulauf 2 wurde das Polymergemisch noch 2 h unter Rühren bei 90°C gehalten. Danach wurde auf 80°C abgekühlt und unter Aufrechterhaltung der 80°C innerhalb von 2 h eine Lösung 3 und 4 synchron kontinuierlich in den Reaktor dosiert.

Zulauf 3:

| | |
|---|---|
| 1,41 kg | VE-Wasser |
| 0,24 kg | tert.-Butylhydroperoxid (t-BHP) (70 Gew.-%) |

Zulauf 4:

| | |
|---|---|
| 1,73 kg | Wasser |
| 0,11 kg | Aceton |
| 0,41 kg | Natriumdisulfit |

Anschließend wurde der pH-Wert des wässrigen Mediums durch Zusatz einer ca. 10 %igen wässrigen Natriumhydroxid-Lösung (Zulauf 5) angehoben und danach durch Durchleiten von Wasserdampf physikalisch desodoriert.

Zulauf 5:

| | |
|---|---|
| 1,5 kg<br>1,0 kg | VE-Wasser<br>Natriumhydroxid 25 % |

Erhalten wurde erfindungsgemäß eine zu verwendende Polymerisatdispersion, deren Feststoffgehalt etwa 51 Gew.-% betrug und deren Restgehalt an flüchtigen, organischen Bestandteilen unterhalb von 100 ppm lag. Das dispergierte Polymerisat wies nachfolgende Monomerzusammensetzung auf:

| | |
|---|---|
| 54,25 Gew.-%<br>42,25 Gew.-%<br>1,5 Gew.-% | Styrol<br>Butadien<br>Itaconsäure |

Die Glasübergangstemperatur ihrer Verfilmung lag bei -3°C.

Beispiel 3

Wie in Beispiel 1, jedoch wurde die Dispersion nach Fertigstellung durch Zusatz von 1,84 kg einer 28 gew.-%igen Lösung des Na-Salzes eines sulfanierten Fettalkoholethoxylates mit Na-Ionen angereichert (Zulauf 6)

Zulauf 6:

2,84 kg Sulfatiertes Fettalkoholethoxylat Na-Salz (28 Gew.-%).

B. Herstellung der Vergleichspolymerisatdispersionen VD

Vergleichsbeispiel A

Wie Beispiel 2, jedoch enthielt Zulauf 5 2,25 kg 25%ige NaOH.

Vergleichsbeispiel B

Wie Beispiel 2, jedoch wurden in Zulauf 2 0,3 kg Natriumpersulfat eingesetzt. Außerdem wurden 0,4 kg Natriumhydroxid aus Zulauf 5 herausgenommen und zu Zulauf 1 hinzugegeben.

Vergleichsbeispiel C

Wie Beispiel 2, jedoch wurden 2,1 kg Styrolsaat (anstelle von 1,5 kg) eingesetzt und Zulauf 5 setzte sich folgendermaßen zusammen:

| | |
|---|---|
| 1,95 kg<br>1,3 kg | VE-Wasser<br>Natriumhydroxid 25 % |

Zusammensetzung der verwendeten Polymerisatdispersionen:

Tabelle I

| Probe | Zusammensetzung | t-DMK | FG/% | AZ/nm |
|---|---|---|---|---|
| Beispiel 1 | 1,5% IS, 54,25% S, 44,25% Bu, 1,44% sulfaniertes Fettalkoholethoxylat Na-Salz | 1,4 | 55,5 | 149 |
| Beispiel 2 | 1,5% IS, 54,25% S, 44,25% Bu, 1,44% sulfaniertes Fettalkoholethoxylat Na-Salz | 1,9 | 50,3 | 151 |

Tabelle I (fortgesetzt)

| Probe | Zusammensetzung | t-DMK | FG/% | AZ/nm |
|---|---|---|---|---|
| Beispiel 3 | 1,5% IS, 54,25% S, 44,25% Bu, 2,36% sulfaniertes Fettalkoholethoxylat Na-Salz | 2 | 52,3 | 150 |
| Vergleichsbeispiel A | 1,5% IS, 54,25% S, 44,25% Bu, 1,44% sulfaniertes Fettalkoholethoxylat Na-Salz | 2 | 50 | 136 |
| Vergleichsbeispiel B | 1,5% IS, 54,25% S, 44,25% Bu, 1,44% sulfaniertes Fettalkoholethoxylat Na-Salz | 1,4 | 50 | 145 |
| Vergleichs-beispiel C | 1,5% IS, 54,25% S, 44,25% Bu, 1,44% sulfaniertes Fettalkoholethoxylat Na-Salz | 1,6 | 50,9 | 135 |

In der Tabelle I bedeuten:

| | | | | | |
|---|---|---|---|---|---|
| IS | Itaconsäure | S | Styrol | Bu | Butadien |
| t-DMK | tert.-Dodecylmercaptan | | | FG | Feststoffgehalt |
| AZ | z-mittlerer Polymerisatteilchendurchmesser | | | | |

C) Formulierung von wässrigen Polymerisatzubereitungen aus den wässrigen Polymerisatdisperionen ED sowie der Vergleichspolymerisatdispersion VD

Formulierungsrezeptur:

x Gew.-Teile Dispersionen (Menge für jedes Beispiel in Tabelle II angegeben)

y Gew.-Teile ethoxylierter Fettalkohol mit 8 (EO-Einheiten) (Menge für jedes Beispiel in Tabelle II angegeben)

12 Gew.-Teile Byk®-035 (Entschäumer der Firma Byk-Chemie GmbH, Wesel, DE)

10 Gew.-Teile Pigmentverteiler MD 20 (Natriumsalz eines Copolymers aus Maleinsäure und Diisobutylen in wässriger Lösung), der Firma BASF AG)

5 Gew.-Teile Kronos® 2056 (feinteiliges $TiO_2$ (Rutie), der Firma Kronos Titan-GmbH, Leverkusen, DE)

475 Gew.-Teile Omyacarb® 5 GU (Calciumcarbonat der Firma Omya GmbH, Köln)

6 Gew.-Teile Collacral® PU, 75,5 gew-%ig (Assoziativverdicker auf Polyurethanbasis der BASF AG, Ludwigshafen, DE).

De aus B) jeweils erhaltenen Polymerisatdispersionen ED und VD wurden zu Polymerisatzubereitungen umgesetzt.
Die Pigmentvolumenkonzentration der resultierenden Formulierungen lag bei ca. 40 Vol.-%, ihr Feststoffgehalt betrug ca. 77 Gew.-%.

D) Bestimmung der Wasseraufnahme und der Wasserdampfdurchlässigkeit (WDD) der Formulierungen aus C)

Tabelle II

| | Beispiel 1 | Beispiel 2 | Beispiel 3 | Vergl.-beisp. A | Vergl.-beisp. B | Vergl.-beisp. C |
|---|---|---|---|---|---|---|
| Gew.-Teile ethoxylierter Fettalkohol mit 8 (EO-Einheiten) | 27 | 27 | 20,25 | 27 | 27 | 27 |
| Gew.-Teile Dispersion | 453 | 484 | 457 | 484 | 482 | 481 |
| pH-Wert | 5,5 | 5,9 | 5,8 | 6,7 | 6,1 | 7,0 |
| Wasseraufnahme in 48 h [Gew.-%] | 4,4 | 3,5 | 4,6 | 7 | 9,8 | 9,8 |
| Wasseraufnahme in 96 h [Gew.-%] | 6,7 | 5 | 6,6 | 13,3 | 13,4 | 12,9 |
| Wasseraufnahme in 24 h [Gew.-%] | 2 | 1,8 | 1,9 | 1,7 | 1,9 | 1,9 |
| WDD in $g/m^2*d$ | 0,9 | 2,1 | 4,3 | 6,5 | 7,8 | 14,4 |
| Na-Gehalt a) | 0,51 | 0,53 | 0,57 | 0,53 | 0,57 | 0,62 |

a) bezogen auf die Masse des dispergierten Polymerisats (d.h. bezogen auf die Monomeren)

Bestimmung der Wasserdampfdurchlässigkeit WDD [$g/m^2$ Tag] nach DIN 52 615 (Trockenschichtdicke 0,6 mm) bei einem Feuchtegefälle von 50 % zu 93 % relativer Luftfeuchtigkeit und 23°C;

Bestimmung der Wasseraufnahme WA [Gew.-%] nach 24 h, 48 h und nach 96 h; 23°C.

Ein günstiger Wasseraufnahmewert ist dann erreicht, wenn dieser nach 48 Stunden noch unterhalb von 5 Gew.-% liegt. Dies wird bei den erfindungsgemäßen Beispielen 1 bis 3 erreicht, nicht aber bei den Vergleichsbeispielen A bis C. Die erfindungsgemäßen Beispiele 1 bis 3 zeichnen sich auch durch erheblich bessere Werte hinsichtlich der Wasserdampfdurchlässigkeit aus, im Vergleich zu den Vergleichsbeispielen A bis C.

## Patentansprüche

**1.** Wäßrige Polymerisatdispersion, deren in disperser Verteilung befindliches Polymerisat in radikalisch polymerisierter Form aus

20 bis 65 Gew.-% wenigstens eines vinylaromatischen Monomeren (Monomere A),

30 bis 75 Gew.-% wenigstens eines zwei konjugierte ethylenisch ungesättigte Doppelbindungen aufweisenden Monomeren (Monomere B) und

0,5 bis 10 Gew.-% wenigstens eines sonstigen Monomeren C, ausgewählt aus der Gruppe der $\alpha,\beta$-monoethylenisch ungesättigten Mono- und Dicarbonsäuren sowie ihrer Amid- oder ihrer Esterderivate

aufgebaut ist und deren Gehalt GA an Alkalimetallionen, bezogen auf die Masse des dispergierten Polymerisate $\geq$ 0,5 Gew.-% beträgt, wobei der pH-Wert des wäßrigen Dispergiermediums auf einen Wert unterhalb von 6 eingestellt wird.

**2.** Wäßrige Polymerisatdispersion nach Anspruch 1, wobei als Monomere A Styrol und/oder Vinyltoluol verwendet werden.

**3.** Wäßrige Polymerisatdispersion nach Anspruch 1, wobei Styrol alleiniges Monomer A ist.

**4.** Wäßrige Polymerisatdispersion nach einem der Ansprüche 1 bis 3, wobei die Monomeren B aus Butadien und/ oder Isopren bestehen.

**5.** Wäßrige Polymerisatdispersion nach einem der Ansprüche 1 bis 4, wobei Butadien alleiniges Monomeres B ist.

**6.** Wäßrige Polymerisatdispersion nach einem der Ansprüche 1 bis 5, wobei die Monomeren C ausgewählt sind aus der Gruppe umfassend Vinylester von 1 bis 3 C-Atome aufweisenden Alkancarbonsäuren, Ester der (Meth)acrylsäure mit 1 bis 8 C-Atome aufweisenden Alkanolen, 3 bis 6 C-Atome aufweisende α,β-monoethylenisch ungesättigte Mono- und Dicarbonsäuren, sowie Amide und Ester von 3 bis 6 C-Atome aufweisenden α,β-monoethylenisch ungesättigten Mono- und Dicarbonsäuren.

**7.** Wäßrige Polymerisatdispersion nach Anspruch 6, wobei die $_M$onomeren C ausgewählt sind aus der Gruppe umfassend, Vinylformiat, Vinylacetat, Vinylpropionat, Acrylsäure, Methacrylsäure, Maleinsäure, Itaconsäure, Acrylamid, Methacrylamid, Methylacrylat, Methylmethacrylat, Ethylacrylat, Ethylmethacrylat, n-Butylacrylat, n-Butylmethacrylat, tert.-Butylacrylat, tert.-Butylmethacrylat, iso-Butylacrylat, iso-Butylmethacrylat, 2-Ethylhexylacrylat, 2-Ethylhexylmethacrylat, Hydroxyethylacrylat, Hydroxyethylmethacrylat, Hydroxypropylacrylat, Hydroxypropylmethacrylat, Hydroxybutylacrylat sowie Hydroxybutylmethacrylat.

**8.** Wäßrige Polymerisatdispersion nach einem der Ansprüche 1 bis 7, deren in disperser Verteilung befindliches Polymerisat in radikalisch polymerisierter Form aus
45 bis 60 Gew.-% Monomeren A,
35 bis 50 Gew.-% Monomeres B und
0,5 bis 10 Gew.-% Monomeren C
aufgebaut ist.

**9.** Wäßrige Polymerisatdispersion nach einem der Ansprüche 1 bis 8, wobei die Monomeren C ausgewählt sind aus der Gruppe umfassend Acrylsäure, Methacrylsäure, Itaconsäure, sowie deren Amid- und Esterderivate.

**10.** Wäßrige Polymerisatdispersion nach einem der Ansprüche 1 bis 9, deren z-mittlerer Polymerisatteilchendurchmesser im Bereich von ≥ 100 bis ≤ 250 nm liegt.

**11.** Wäßrige Polymerisatdispersion nach einem der Ansprüche 1 bis 10, deren wäßriges Dispergiermedium einem pH-Wert von mehr als 4 und weniger als 6 aufweist.

**12.** Wäßrige Polymerisatdispersion nach einem der Ansprüche 1 bis 11, deren Gehalt GA an Alkalimetallionen, bezogen auf die Masse des dispergierten Polymerisats, im Bereich von ≥ 0,5 bis ≤ 0,7 Gew.-% liegt.

**13.** Wäßrige Polymerisatdispersion nach einem der Ansprüche 1 bis 12, deren dispergierte Polymerisat eine Glasübergangstemperatur von -30 bis +15°C aufweist.

**14.** Wäßrige Polymerisatdispersion nach einem der Ansprüche 1 bis 13, deren Feststoffgehalt 40 bis 70 Gew.-% beträgt.

**15.** Wäßrige Polymerisatzubereitung, die eine wäßrige Polymerisatdispersion gemäß einem der Ansprüche 1 bis 14 sowie feinteilige Pigmente in einer Pigmentvolumenkonzentration von bis zu 60 Vol.-% enthält.

**16.** Verwendung einer wäßrigen Polymerisationsdispersion gemäß einem der Ansprüche 1 bis 14 als Wasserdampfsperre.

**17.** Verwendung einer wäßrigen Polymerisatzubereitung gemäß dem Anspruch 15 zur Erzeugung einer Wasserdampfsperre.

**18.** Verwendung einer wäßrigen Polymerisatdispersion gemäß einem der Ansprüche 1 bis 14 zum Beschichten von Substraten.

**19.** Verwendung einer wäßrigen Polymerisatzubereitung gemäß dem Anspruch 15 zum Beschichten von Substraten.

**20.** Verwendung einer wäßrigen Polymerisatdispersion gemäß einem der Ansprüche 1 bis 14 zum Beschichten der

Wände von Feucht- und Kühlräumen.

**21.** Verwendung einer wäßrigen Polymerisatzubereitung gemäß dem Anspruch 15 zum Beschichten der Wände von Feucht- und Kühlräumen.

**22.** Verfahren zur Herstellung einer wäßrigen Polymerisatdispersion gemäß einem der Ansprüche 1 bis 14 durch radikalische wäßrige Emulsionspolymerisation der Ausgangsmonomeren A, B und C in dem durch den gewünschten Polymerisataufbau entsprechenden Verhältnis, **dadurch gekennzeichnet, dass** man zur Einstellung des pH-Wertes des wäßrigen Dispergiermediums auf einen Wert unterhalb von 6 eine bestimmte Menge einer wäßrigen Alkalimetallhydroxidlösung hinzusetzt.

## Claims

**1.** An aqueous polymer dispersion whose polymer, present in disperse distribution, is composed in free-radically polymerized form of

| | |
|---|---|
| from 20 to 65% | by weight of at least one vinylaromatic monomer (monomers A), |
| from 30 to 75% | by weight of at least one monomer having two conjugated, ethylenically unsaturated double bonds (monomers B), and |
| from 0.5 to 10% | by weight of at least one other monomer, C, selected from the group consisting of $\alpha,\beta$-monoethylenically unsaturated monoand dicarboxylic acids and amide or ester derivatives thereof |

and whose alkali metal ion content GA, based on the mass of the dispersed polymer, is $\geq$ 0.5% by weight, the pH of the aqueous dispersion medium being adjusted to a value below 6.

**2.** The dispersion according to claim 1, wherein the monomers A comprise styrene and/or vinyltoluene.

**3.** The dispersion according to claim 1, wherein styrene is the sole monomer A.

**4.** The dispersion according to any of claims 1 to 3, wherein the monomers B consist of butadiene and/or isoprene.

**5.** The dispersion according to any of claims 1 to 4, wherein butadiene is the sole monomer B.

**6.** The dispersion according to any of claims 1 to 5, wherein the monomers C are selected from the group comprising vinyl esters of alkanecarboxylic acids having 1 to 3 carbon atoms, esters of (meth)acrylic acid with alkanols having 1 to 8 carbon atoms, $\alpha,\beta$-monoethylenically unsaturated mono- and dicarboxylic acids having 3 to 6 carbon atoms, and amides and esters of $\alpha,\beta$-monoethylenically unsaturated mono- and dicarboxylic acids having 3 to 6 carbon atoms.

**7.** The dispersion according to claim 6, wherein the monomers C are selected from the group comprising vinyl formate, vinyl acetate, vinyl propionate, acrylic acid, methacrylic acid, maleic acid, itaconic acid, acrylamide, methacrylamide, methyl acrylate, methyl methacrylate, ethyl acrylate, ethyl methacrylate, n-butyl acrylate, n-butyl methacrylate, tert-butyl acrylate, tert-butyl methacrylate, isobutyl acrylate, isobutyl methacrylate, 2-ethylhexyl acrylate, 2-ethylhexyl methacrylate, hydroxyethyl acrylate, hydroxyethyl methacrylate, hydroxypropyl acrylate, hydroxypropyl methacrylate, hydroxybutyl acrylate and hydroxybutyl methacrylate.

**8.** The dispersion according to any of claims 1 to 7, whose polymer, present in disperse distribution, is composed in free-radically polymerized form of
from 45 to 60% by weight of monomers A,
from 35 to 50% by weight of monomers B and
from 0.5 to 10% by weight of monomers C.

**9.** The dispersion according to any of claims 1 to 8, wherein the monomers C are selected from the group comprising of acrylic acid, methacrylic acid, itaconic acid, and the amide and ester derivatives thereof.

**10.** The dispersion according to any of claims 1 to 9, whose z-mean polymer particle diameter is from ≥ 100 to ≤ 250 nm.

**11.** The dispersion according to any of claims 1 to 10, whose aqueous dispersion medium has a pH of more than 4 and less than 6.

**12.** The dispersion according to any of claims 1 to 11, whose alkali metal ion content GA, based on the mass of the dispersed polymer, is from ≥ 0.5 to ≤ 0.7% by weight.

**13.** The dispersion according to any of claims 1 to 12, whose dispersed polymer has a glass transition temperature from -30 to +15°C.

**14.** The dispersion according to any of claims 1 to 13, whose solids content is from 40 to 70% by weight.

**15.** An aqueous polymer formulation which comprises a dispersion according to any of claims 1 to 14 and finely divided pigments in a pigment volume concentration of up to 60% by volume.

**16.** The use of a dispersion according to any of claims 1 to 14 as a water-vapor barrier.

**17.** The use of a formulation according to claim 15 for producing a water-vapor barrier.

**18.** The use of a dispersion according to any of claims 1 to 14 for coating substrates.

**19.** The use of a formulation according to claim 15 for coating substrates.

**20.** The use of a dispersion according to any of claims 1 to 14 for coating the walls of damp rooms and refrigeration rooms.

**21.** The use of a formulation according to claim 15 for coating the walls of damp rooms and refrigeration rooms.

**22.** A process for preparing a dispersion according to any of claims 1 to 14 by free-radical aqueous emulsion polymerization of the starting monomers A, B and C in the ratio corresponding to the desired polymer structure, which comprises adding a defined amount of an aqueous alkali metal hydroxide solution in order to adjust the pH of the aqueous dispersion medium to a value below 6.

**Revendications**

**1.** Dispersion aqueuse de polymère, dont le polymère, qui se trouve réparti de manière dispersée, est, sous une forme polymérisée par voie radicalaire, constitué
de 20 à 65 % en poids d'au moins un monomère vinyl-aromatique (monomère A),
de 30 à 75 % en poids d'au moins un monomère présentant deux doubles liaisons éthyléniquement insaturées, conjuguées (monomère B), et
de 0,5 à 10 % en poids d'au moins un autre monomère C, choisi parmi le groupe des acides monocarboxyliques et dicarboxyliques $\alpha,\beta$-monoéthyléniquement insaturés ainsi que de leurs dérivés amide ou ester,
et dont la teneur GA en ions de métal alcalin, par rapport à la masse du polymère dispersé, est ≥ 0,5 % en poids, la valeur de pH du milieu de dispersion aqueux étant ajustée à une valeur inférieure à 6.

**2.** Dispersion aqueuse de polymère suivant la revendication 1, dans laquelle on utilise, comme monomère A, du styrène et/ou du vinyltoluène.

**3.** Dispersion aqueuse de polymère suivant la revendication 1, dans laquelle le styrène est le seul monomère A.

**4.** Dispersion aqueuse de polymère suivant l'une des revendications 1 à 3, dans laquelle les monomères B sont constitués de butadiène et/ou d'isoprène.

**5.** Dispersion aqueuse de polymère suivant l'une des revendications 1 à 4, dans laquelle le butadiène est le seul monomère B.

6. Dispersion aqueuse de polymère suivant l'une des revendications 1 à 5, dans laquelle les monomères C sont choisis parmi le groupe comprenant des esters vinyliques d'acides alcanecarboxyliques présentant 1 à 3 atomes de C, des esters de l'acide (méth)acrylique avec des alcanols présentant 1 à 8 atomes de C, des acides monocarboxyliques et dicarboxyliques α,β-monoéthyléniquement insaturés présentant 3 à 6 atomes de C, ainsi que des amides et esters d'acides monocarboxyliques et dicarboxyliques α,β-monoéthyléniquement insaturés présentant 3 à 6 atomes de C.

7. Dispersion aqueuse de polymère suivant la revendication 6, dans laquelle les monomères C sont choisis parmi le groupe comprenant du formiate de vinyle, de l'acétate de vinyle, du propionate de vinyle, de l'acide acrylique, de l'acide méthacrylique, de l'acide maléique, de l'acide itaconique, de l'acrylamide, du méthacrylamide, de l'acrylate de méthyle, du méthacrylate de méthyle, de l'acrylate d'éthyle, du méthacrylate d'éthyle, de l'acrylate de n-butyle, du méthacrylate de n-butyle, de l'acrylate de tert-butyle, du méthacrylate de tert-butyle, de l'acrylate d'iso-butyle, du méthacrylate d'iso-butyle, de l'acrylate de 2-éthylhexyle, du méthacrylate de 2-éthylhexyle, de l'acrylate d'hydroxyéthyle, du méthacrylate d'hydroxyéthyle, de l'acrylate d'hydroxypropyle, du méthacrylate d'hydroxypropyle, de l'acrylate d'hydroxybutyle ainsi que du méthacrylate d'hydroxybutyle.

8. Dispersion aqueuse de polymère suivant l'une des revendications 1 à 7, dont le polymère, qui se trouve réparti de manière dispersée, est, sous une forme polymérisée par voie radicalaire, constitué
de 45 à 60 % en poids de monomères A,
de 35 à 50 % en poids de monomère B, et
de 0,5 à 10% en poids de monomères C.

9. Dispersion aqueuse de polymère suivant l'une des revendications 1 à 8, dans laquelle les monomères C sont choisis parmi le groupe comprenant de l'acide acrylique, de l'acide méthacrylique, de l'acide itaconique ainsi que leurs dérivés amide et ester.

10. Dispersion aqueuse de polymère suivant l'une des revendications 1 à 9, dont le diamètre moyen z des particules de polymère est de l'ordre de ≥ 100 à ≤ 250 nm.

11. Dispersion aqueuse de polymère suivant l'une des revendications 1 à 10, dont le milieu de dispersion aqueux présente une valeur de pH supérieure à 4 et inférieure à 6.

12. Dispersion aqueuse de polymère suivant l'une des revendications 1 à 11, dont la teneur GA en ions de métal alcalin, par rapport à la masse du polymère dispersé, est de l'ordre de ≥ 0,5 à ≤ 0,7 % en poids.

13. Dispersion aqueuse de polymère suivant l'une des revendications 1 à 12, dont le polymère dispersé présente un température de transition vitreuse de -30 à +15°C.

14. Dispersion aqueuse de polymère suivant l'une des revendications 1 à 13, dont la teneur en matière solide est de 40 à 70 % en poids.

15. Composition aqueuse de polymère, qui contient une dispersion aqueuse de polymère suivant l'une des revendications 1 à 14 ainsi que des pigments finement divisés en une concentration volumique de pigment de jusqu'à 60 % en volume.

16. Utilisation d'une dispersion aqueuse de polymère suivant l'une des revendications 1 à 14, comme barrière contre la vapeur d'eau.

17. Utilisation d'une composition aqueuse de polymère suivant la revendication 15, pour la production d'une barrière contre la vapeur d'eau.

18. Utilisation d'une dispersion aqueuse de polymère suivant l'une des revendications 1 à 14, pour l'enduction de substrats.

19. Utilisation d'une composition aqueuse de polymère suivant la revendication 15, pour l'enduction de substrats.

20. Utilisation d'une dispersion aqueuse de polymère suivant l'une des revendications 1 à 14, pour l'enduction des parois de chambres humides et de chambres froides.

**21.** Utilisation d'une composition aqueuse de polymère suivant la revendication 15, pour l'enduction des parois de chambres humides et de chambres froides.

**22.** Procédé de préparation d'une dispersion aqueuse de polymère suivant l'une des revendications 1 à 14, par polymérisation en émulsion aqueuse radicalaire des monomères de départ A, B et C dans le rapport correspondant à la constitution souhaitée du polymère, **caractérisé en ce que**, pour l'ajustement de la valeur du pH du milieu de dispersion aqueux à une valeur inférieure à 6, on ajoute une quantité déterminée d'une solution aqueuse d'hydroxyde de métal alcalin.